# EUROPEAN PATENT SPECIFICATION

(11) **EP 0 469 695 B1**
(45) Date of publication and mention of the grant of the patent: **24.04.1996**
(21) Application number: 91301438.7
(22) Date of filing: 22.02.1991
(51) Int. Cl.: E06B 9/386, E06B 9/266

(54) **Blind and slat therefor, method and apparatus for making same**
Verfahren und Vorrichtung für die Herstellung der Lamellen eines Stores
Procédé et dispositif de fabrication des lamelles d'un store

(30) Priority: 01.08.1990 JP 205468/90; 09.08.1990 JP 209687/90
(43) Date of publication of application: 05.02.1992
(73) Proprietor: KABUSHIKI KAISHA NICHIBEI, Chuo-ku Tokyo (JP)
(72) Inventor: Takei, Ikuo c/o KABUSHIKI KAISHA NICHIBEI KAIHATSU, Aikou-gun, Kanagawa-ken (JP); Sakuma,Eiji c/o KABUSHIKI KAISHA NICHIBEI KAIHATSU, Aikou-gun, Kanagawa-ken (JP)
(74) Representative: Beresford, Keith Denis Lewis

(56) References cited:
- EP-A- 0 370 120
- JP-U- 6 221 298
- US-A- 4 884 615
- US-A- 4 930 562

## Description

### Background of the Invention:

### Field of the Invention:

The present invention relates to a cloth blind and a method and an apparatus for manufacturing a blind slat of the cloth blind. Particularly, it relates a cloth blind having characteristic feature in a shape and a construction of the blind slat and a method and an apparatus for manufacturing such blind slat.

### Description of the Prior Art:

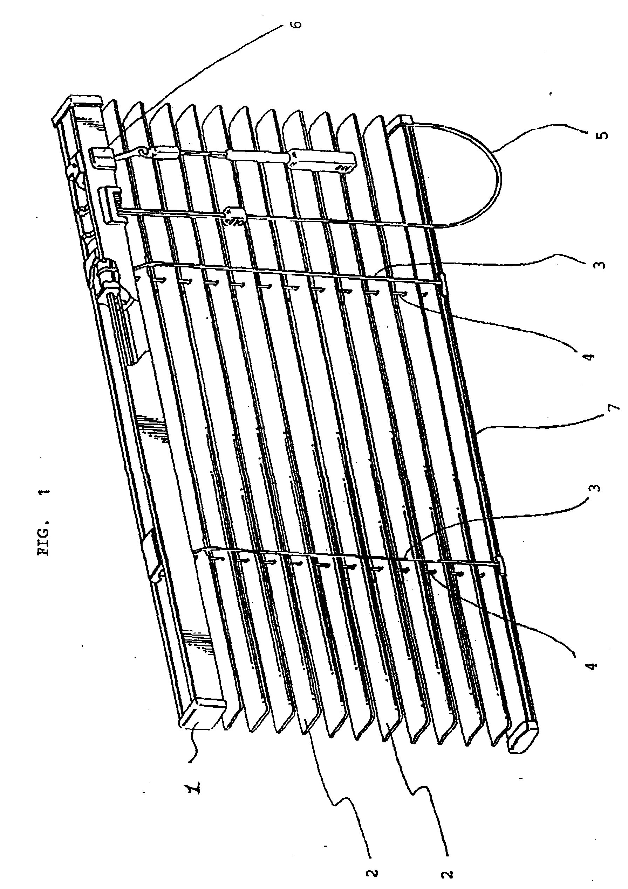

Fig. 1 illustrates a general construction of a conventional horizontal type blind.

As well known in the art, the horizontal type blind comprises a headbox 1, a plurality of blind slats 2, each consisting of a narrow thin plate, ladder cords 3 for supporting the slats at vertically spaced relation from each other and controlling tilting of the respective slats to adjust light shading effect of the blind, said ladder cords hanging from said headbox 1, and lifting/lowering cords 4 for lifting or lowering the slats. The lifting/lowering cords 4 are operated by an operating cord 5 to open or close the blind and the ladder cords 3 are operated by an operating rod to control tilting of the respective slats to adjust light shading effect of the blind. A rail 7 is arranged at the bottom of the group of the slats.

In the conventional horizontal type blind, each slat is an elongated and narrow thin plate having a width of about 10 - 50 mm and a length of about 300 - 3000 mm, in which at least two through-holes are formed to allow the lifting/lowering cords to pass therethrough. In order to provide the slat with sufficient strength, it has been the usual practice to use the slat made of a metallic material, typically an aluminum alloy.

Such blind has been used as a light controlling instrument, for example in an office room. Recently, the blind of this kind plays an important role as an interior of a house and tends to be widely used in an individual home. According to such trend, slats of a plurality of colors have been developed.

On the other hand, the blind having slats made of metallic material has such disadvantage that the blind presents a cold appearance, owing to the metallic color and luster of the slats, when it is used in an office. In order to avoid such disadvantage it has been proposed to cover the slat with a bag-shaped soft cover. (Japanese Utility Model Publication No. Sho 52-56001, Japanese Utility Model Application Laid-Open No. Sho 62-21298).

As explained above, the conventional blind, using metallic slats, provides mechanically and functionally good effect, but it presents a cold appearance. Such disadvantage can be overcome by covering the metallic slat with the bag-shaped soft cover, which presents a warm appearance. However, such soft cover only serves to improve the feeling of the blind and cannot provide a temperature-holding and heat-insulating property and a sound-insulating property, such as attained by a cloth curtain or the like.

US Patent Specifications Nos. 4,884,615 and 4,930,562 both disclose methods of making blind slats.

It is a concern of the present invention to eliminate the disadvantage of the conventional blind which presents a cold appearance owing to the metallic slats.

It is another concern of the present invention to provide a cloth blind which produces a heat insulating effect, in addition to a light controlling effect, and which can be advantageously used, as a window light controlling instrument, in a cold district or a cold season.

It is a further concern of the present invention to provide a cloth blind in which a metallic slat is covered with a cloth casing, which serves to prevent an operator's body, such as hand, from being injured by a sharp edge of the metallic slat and which presents a novel appearance and a unique ornamental effect to the blind.

It is a further concern of the present invention to provide a method and an apparatus for manufacturing the cloth blind as mentioned above in effective manner at a low cost.

In accordance with one aspect of the present invention there is provided a method of manufacturing a blind slat as set out in claim 1.

In accordance with a second aspect of the invention there is provided apparatus for manufacturing blind slats as set out in claim 6.

In order that the present invention may be more readily understood, an embodiment of the invention will now be described by way of example and with reference to the accompanying drawings, in which:

Fig. 1 is a perspective view illustrating a general arrangement of a blind according to a prior art.

Fig. 2 is a partly broken perspective view showing a construction of a cloth slat for use in one example of the blind according to the present invention.

Fig. 3 is a sectional view taken along a line A-A in Fig. 2.

Fig. 4 is a diagrammatic side view showing an apparatus for manufacturing the cloth slat according to the present invention.

Fig. 5 is a partly enlarged view illustrating a welding apparatus and the cloth slat which has passed through the welding apparatus.

Figs. 6-8 illustrate modified forms of the cloth blind slat.

### Detailed Description of the Preferred Embodiments:

Now the invention will be explained with reference to the preferred embodiments shown in the drawings.

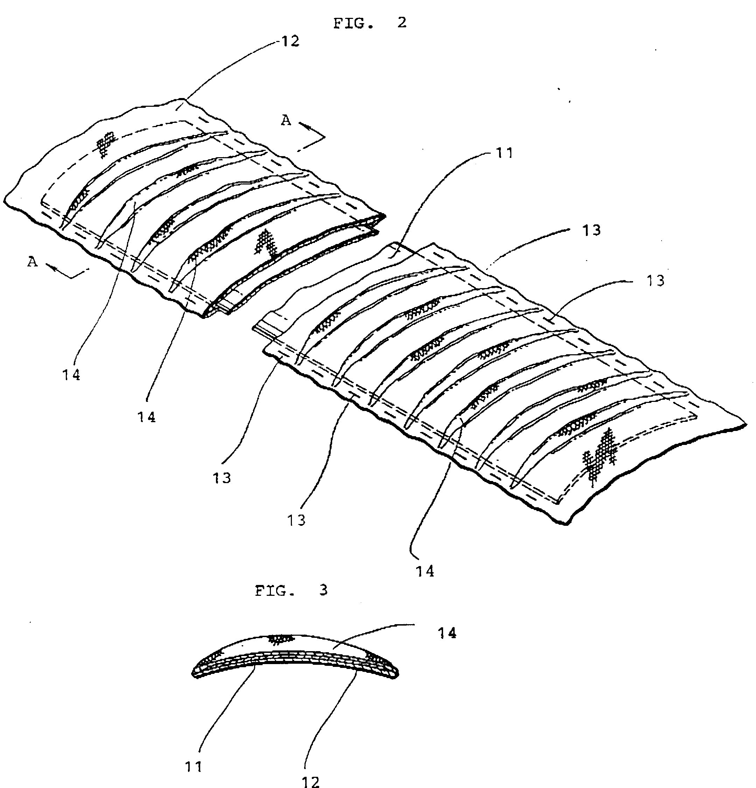

Figs. 2 and 3 illustrate a blind slat used in one embodiment of the present invention. As shown in these drawings, the blind slat according to the present invention is characterized by a slat body covered with a cloth casing having wrinkles.

In Fig. 2, 11 designates a slat body of the blind slat according to the present invention which is made of an aluminum thin plate. The size and the shape of the slat body may be same as that of the conventional blind slat. In the illustrated example, the slat body is formed in slightly curved shape upwardly.

12 designates a cloth casing which covers the aluminum slat body. The size of this cloth casing is larger than that of the slat body, so that the cloth casing is allowed to form wrinkle on the slat body.

In the illustrated example, after the slat body 11 has been inserted into the elongated casing 12, the side edge portions of the casing at both sides of the slat body are wrinkled in longitudinal direction and welded to the slat body at points 13 closely spaced apart along the side edges. Thus, raised wrinkles 14 are formed in widthwise direction of the slat body, as shown in Fig. 3.

According to this construction, hollow air layer portions are formed in the wrinkles 14 and the blind slat presents an appearance of cloth having wrinkles at distances of few millimeters.

After forming the wrinkles, the cloth slat is subjected to finishing process and formed with through-holes which allow the lifting/lowering cords to pass therethrough. The cloth slat thus formed is used to constitute the blind as shown in Fig. 1.

The wrinkles are arranged at equal intervals in the illustrated example, but these wrinkles may be arranged at smaller intervals near the longitudinally end areas and at larger intervals at the central area. The sizes of the wrinkles may be varied so as to correspond to patterns printed on the cloth casing.

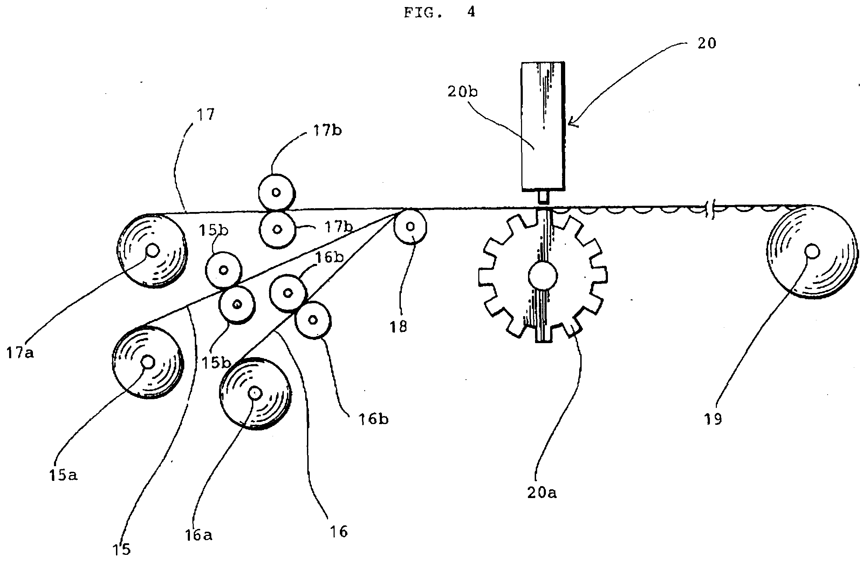

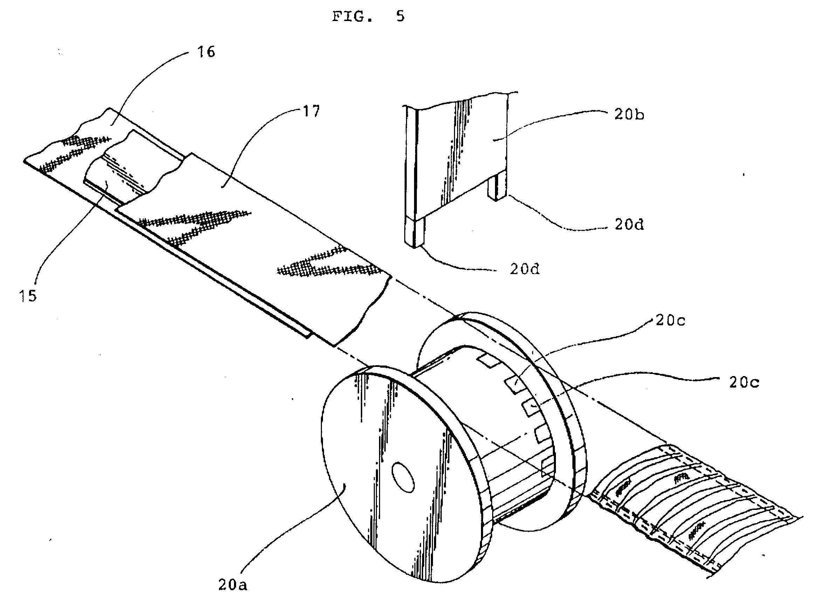

The method and the apparatus for manufacturing the cloth blind according to the present invention will be explained with reference to Figs. 4 and 5, which illustrate an embodiment of the apparatus for manufacturing a cloth blind, according to the present invention.

Fig. 4 shows one example of the construction of the apparatus for manufacturing the cloth blind according to the present invention.

The apparatus shown in Fig. 4 comprises a first feeding means for feeding a strip material 15 of aluminum thin plate including a roll 15a of said strip material and unwinding rolls 15b for unwinding the strip material from the roll 15a; a second feeding means for feeding an upper side elongated cloth sheet 16 including a roll 16a of said material and unwinding rolls 16b for unwinding the cloth sheet 16 from the roll 16a; and a third feeding means for feeding a lower side elongated cloth sheet 17 including a roll 17a of said material and unwinding rolls 17b for unwinding the cloth sheet 17 from the roll 17a. These feeding means constitute an unwinding mechanism for unwinding the above-mentioned three sheets.

The feeding speed of the feeding roll 16a which forms the feeding means for feeding the upper side cloth sheet 16 is set at a faster speed than the feeding speeds of the other feeding rolls 15a and 17a and the three sheets unwound from the feeding rolls 15a, 16a and 17a are integrated into a stacked assembly at an assembling roll 18 to form an assembly including the aluminum thin plate and the elongated cloth sheets in which the side margins of the cloth sheets 16 and 17 are aligned with each other and the side edge portions of the cloth sheets extend beyond the side edges of the aluminum thin plate 15. The assembly of these cloth sheets and the aluminum thin plate are conveyed toward a slat winding roll 19.

On the way from the assembling roll 18 to the slat winding roll 19, a welding apparatus 20 is arranged. The welding apparatus includes a welding roll 20a disposed at one side of the path of the assembled slat and a welder 20b disposed at the other side of said path. The welding roll 20a has series of electrodes 20c which are intermittently disposed along both sides of said welding roll in circumferential direction at equal intervals, while the welder 20b has counterelectrodes 20d. The respective pairs of the electrodes 20c and the counterelectrodes serve to intermittently weld the cloth sheets and the aluminum thin plate together.

The rotary speed of the welding roll 20a is set so that the upper side cloth sheet 16 is fed at slightly higher speed than the aluminum thin plate 15 to form the wrinkles in the upper side cloth sheet 16 owing to the conveying speed of the welding roll 20a and the set position thereof. Preferably, the welder 20b is constructed in movable type so that said welder can intermittently move into contact with the assembled slat material or move away therefrom.

By the method and the apparatus for manufacturing the cloth slat as described above, the hollow air layers are formed in the wrinkle portions of the cloth slat. This cloth slat presents a novel and beautiful appearance having wrinkles spaced apart by few millimeters.

The cloth slat thus formed by the process shown in Figs. 4 and 5 is cut to desired lengths and subjected to a finishing process for finishing the longitudinal ends and the both portions of the slat. Then it is subjected to hole forming process. The cloth slats thus formed are assembled into the form of the horizontal type blind.

It is preferable to provide a mechanism for adjusting the rotary speed of the feeding rolls to vary the distance between the wrinkles, sizes of the wrinkles or the like.

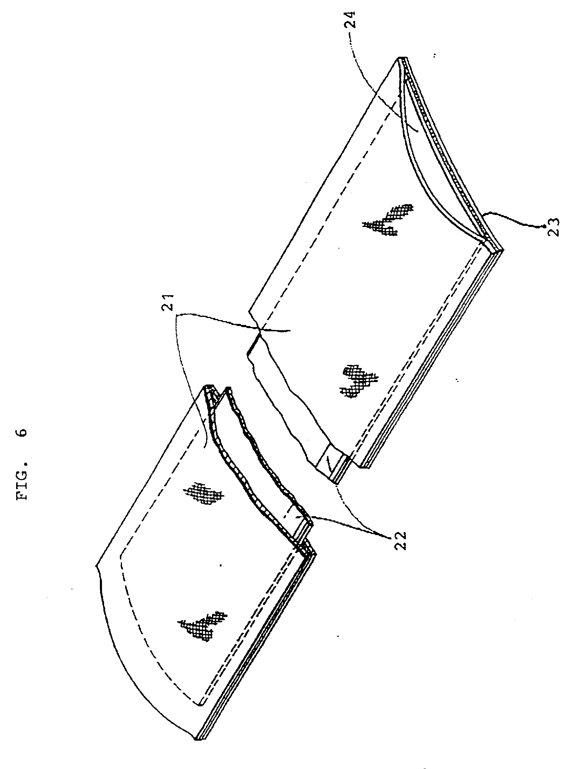

The cloth blind slat according to the present invention may be modified in various forms. Some examples of the modification are shown in Figs. 6-8.

Fig. 6 illustrates an embodiment in which an upper side cloth sheet 21 is welded to an aluminum thin plate 22 and a lower side cloth sheet 23 only at both side edges to form a hollow air layer 24 under the upper side cloth sheet.

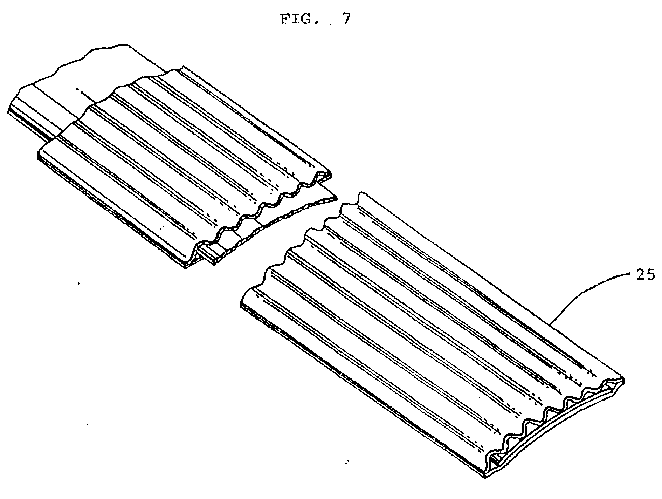

Fig. 7 illustrates an embodiment in which an upper side cloth sheet 25 is formed in a corrugated shape.

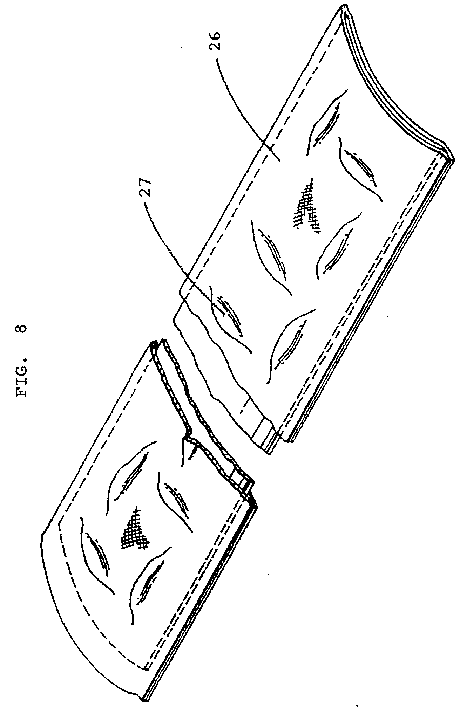

Fig. 8 illustrates an embodiment in which an upper side cloth sheet 26 has raised patterns 27 under which hollow air layers are formed.

It will be understood that the present invention provides a horizontal type blind which eliminates a problem of presenting a cold appearance of a blind including metallic slats and prevents an operator from being injured by a sharp edge of a metallic slat. Furthermore, the blind according to the present invention serves to not only provide a light controlling effect but also provide a temperature-holding and heat-insulating effect as well as a sound-insulating effect, owing to the presence of the air layer under the cloth casing. The casing is easily removable from the slat, so that when the slat becomes dirty the casing can be easily removed and washed.

## Claims

1. A method of manufacturing a blind slat for a blind comprising:
longitudinally feeding a strip of material (15); and
feeding a pair of elongated cloth sheets (16,17) into contact with the respective upper and lower surfaces of the strip material;
and characterised in that at least one of the cloth sheets is fed at a higher rate than the strip material; securing portions of the cloth sheets to the strip material; and cutting the cloth sheets and strip material to predetermined lengths to form blind slats.

2. A method according to claim 1, and further characterised in that only one cloth sheet is fed at a higher rate than the strip material.

3. A method according to claim 2, and further characterised in that the feeding rate of said one cloth sheet is between 1.2 to 1.5 times higher than that of the strip material.

4. A method according to any one of the preceding claims and characterised in that the cloth sheets are wider than the strip material and in that edge portions of the cloth sheets are intermittently fixed to the strip material.

5. A method as claimed in claim 4 and still further characterised in that the cloth sheets are intermittently welded to the strip material.

6. Apparatus for manufacturing blind slats in accordance with the method of claim 1 and characterised in that it comprises:
first feeding means (15b) for feeding a strip of material;
second and third feeding means (16b,17b) for feeding elongated cloth sheets into contact with the respective upper and lower surfaces of the strip material;
conveying means for conveying the assembly formed by the respective layers of cloth and strip material; and
fixing means for securing the cloth sheets to the strip material;
and still further characterised in that at least one of the second or third feeding means feeds its associated elongated cloth sheet at a rate higher than that of the feeding means for the strip material.

7. Apparatus according to claim 6 and further characterised in that said fixing means comprises a welder (20b).

## Patentansprüche

1. Verfahren zur Herstellung einer Jalousielamelle für eine Jalousie mit den folgenden Schritten:
Längszuführen eines Streifens eines Materials (15); und
Zuführen eines Paars länglicher Stoffbahnen (16, 17) in eine Berührung mit der oberen bzw. unteren Oberfläche des Streifenmaterials;
dadurch gekennzeichnet, daß mindestens eine der Stoffbahnen mit einer höheren Geschwindigkeit als das Streifenmaterial zugeführt wird; Befestigen von Abschnitten der Stoffbahnen an dem Streifenmaterial; und Schneiden der Stoffbahnen und des Streifenmaterials in vorbestimmte Längen, um Jalousielamellen auszubilden.

2. Verfahren nach Anspruch 1, ferner dadurch gekennzeichnet, daß nur eine Stoffbahn mit einer höheren Geschwindigkeit als das Streifenmaterial zugeführt wird.

3. Verfahren nach Anspruch 2, ferner dadurch gekennzeichnet, daß die Zufuhrgeschwindigkeit der einen Stoffbahn um das 1,2- bis 1,5fache höher als die des Streifenmaterials ist.

4. Verfahren nach einem der vorhergegangenen Ansprüche, dadurch gekennzeichnet, daß die Stoffbahnen breiter als das Streifenmaterial sind und daß Kantenabschnitte der Stoffbahnen absatzweise an dem Streifenmaterial befestigt werden.

5. Verfahren nach Anspruch 4, ferner dadurch gekennzeichnet, daß die Stoffbahnen absatzweise mit dem Streifenmaterial verschweißt werden.

6. Vorrichtung zur Herstellung von Jalousielamellen gemäß dem Verfahren von Anspruch 1, dadurch gekennzeichnet, daß sie aufweist:
eine erste Zufuhreinrichtung (15b) zum Zuführen eines Streifens aus einem Material;
eine zweite und dritte Zufuhreinrichtung (16b, 17b) zum Zuführen länglicher Stoffbahnen in eine Berührung mit der oberen bzw. unteren Oberfläche des Streifenmaterials;
eine Transporteinrichtung zum Transportieren der durch die jeweiligen Schichten aus Stoff und Streifenmaterial gebildeten Zusammenstellung; und
eine Befestigungseinrichtung zum Befestigen der Stoffbahnen an dem Streifenmaterial;
ferner dadurch gekennzeichnet, daß mindestens die zweite oder dritte Zufuhreinrichtung ihre zugehörige längliche Stoffbahn mit einer Geschwindigkeit zuführt, die höher als die der Zufuhreinrichtung für das Streifenmaterial ist.

7. Vorrichtung nach Anspruch 6, ferner dadurch gekennzeichnet, daß die Befestigungseinrichtung ein Schweißgerät (20b) aufweist.

## Revendications

1. Procédé de fabrication d'une latte de store pour un store, comprenant les étapes consistant à :
avancer longitudinalement une bande de matériau (15), et
avancer une paire de feuilles allongées de tissu (16, 17) en contact avec les surfaces supérieure et inférieure respectives du matériau en bande,
et caractérisé en ce qu'au moins une des feuilles de tissu est avancée à une vitesse plus élevée que le matériau en bande, à fixer des parties des feuilles de tissu au matériau en bande, et à couper les feuilles de tissu et le matériau en bande à une longueur prédéterminée pour former des lattes de store.

2. Procédé selon la revendication 1, et caractérisé en outre en ce qu'une seule feuille de tissu est avancée à une vitesse plus élevée que le matériau en bande.

3. Procédé selon la revendication 2, et caractérisé en outre en ce que la vitesse d'avance de ladite une seule feuille de tissu est de 1,2 à 1,5 fois plus élevée que celle du matériau en bande.

4. Procédé selon l'une quelconque des revendications précédentes, et caractérisé en ce que les feuilles de tissu sont plus larges que le matériau en bande, et en ce que les parties de bord des feuilles de tissu sont fixées par intermittence au matériau en bande.

5. Procédé selon la revendication 4, et caractérisé en outre en ce que les feuilles de tissu sont soudées par intermittence au matériau en bande.

6. Dispositif pour la fabrication de lattes de store selon le procédé de la revendication 1, et caractérisé en ce qu'il comprend :
un premier moyen d'alimentation (15b) pour avancer une bande de matériau,
des second et troisième moyens d'alimentation (16b, 17b) pour avancer des feuilles allongées de tissu en contact avec les surfaces supérieure et inférieure respectives du matériau en bande,
des moyens de transport pour transporter l'ensemble formé par les couches respectives de tissu et de matériau en bande, et
des moyens de fixation pour fixer les feuilles de tissu au matériau en bande,
et caractérisé en outre en ce qu'au moins l'un des second ou troisième moyens d'alimentation avance sa feuille allongée de tissu associée à une vitesse plus élevée que celle du moyen d'alimentation pour le matériau en bande.

7. Dispositif selon la revendication 6, et caractérisé en outre en ce que lesdits moyens de fixation comprennent une soudeuse (20b).
